# EUROPÄISCHE PATENTSCHRIFT

(11) **EP 1 030 985 B1**
(45) Veröffentlichungstag und Bekanntmachung des Hinweises auf die Patenterteilung: **04.08.2004**
(21) Anmeldenummer: 98961143.9
(22) Anmeldetag: 06.11.1998
(51) Int. Cl.: F16J 3/04

(54) **FALTENBALG MIT IMPRÄGNIERUNG**
BELLOWS WITH IMPREGNATION
SOUFFLET IMPREGNE

(30) Priorität: 14.11.1997 DE 19750376
(43) Veröffentlichungstag der Anmeldung: 30.08.2000
(73) Patentinhaber: GKN Automotive GmbH, 53797 Lohmar (DE)
(72) Erfinder: SCHMIDT, Thomas, D-53721 Siegburg (DE); WETTE, Joachim, D-53773 Hennef (DE); SCHAFFERUS, Thomas, D-47495 Rheinberg (DE); KONEGEN, Herbert, D-51503 Rösrath (DE); SCHREIBER, Hans, D-66333 Völklingen (DE)
(74) Vertreter: Neumann, Ernst Dieter, Dipl.-Ing.
(86) Internationale Anmeldenummer: PCT/EP1998/007089
(87) Internationale Veröffentlichungsnummer: WO 1999/025997

(56) Entgegenhaltungen:
- EP-A- 0 315 363
- EP-A- 0 807 764
- DE-C- 4 301 062

## Beschreibung

Die Erfindung bezieht sich auf ein Imprägniermittel für Faltenbälge aus thermoplastischem oder elastomerem Material und auf derartige Faltenbälge mit einer Imprägnierung. Derartige Faltenbälge dienen häufig zur Abdeckung eines mit Schmiermittel gefüllten Gelenkraumes eines Gelenks, wobei sie den Austritt von Schmiermitteln aus dem Gelenkraum und den Eintritt von Schmutz in den Gelenkraum verhindern. Ein häufiger Anwendungsfall sind drehend umlaufende Gelenke im Bereich von Fahrzeugantriebssträngen. Dabei umschließen die beiden abschließenden Bunde der Faltenbälge zum einen eine Welle und zum anderen ein Gelenkbauteil und sind auf diesen mittels Spannbändern eingespannt.

Bei großen Beugewinkeln des Gelenks werden die Falten der sich mitbeugenden Faltenbälge derart stark verformt, daß sich ihre äußeren Oberflächen gegenseitig berühren. Kommt es hierbei zu Relativbewegungen zwischen den Oberflächen, hat die dann auftretende Reibung zwei unerwünschte Effekte. So ist es nicht zu vermeiden, daß bei hinzutretender Verschmutzung durch eine Scheuerwirkung an den äußeren Oberflächen der Falten mit der Zeit Material abgetragen wird und dadurch die Lebensdauer des Faltenbalges herabgesetzt wird. Bei Faltenbälgen mit einer Laufleistung im Fahrzeug von weniger als 10.000 km ist außerdem bei Hinzutreten von Wasser ein Quietschen (Squeakphänomen) festzustellen, das als Komfortbeinträchtigung angesehen wird.

Aus der DE 43 01 062 C1 ist ein Faltenbalg bekannt, bei dem eine Oberflächenbeschichtung aus Poly-alpha-Olefinen aufgebracht wird, um die Reibung zwischen sich bei starker Beugung des Gelenks gegenseitig berührenden Oberflächen der Faltenbalgwand herabzusetzen. Bei Hinzutreten von Schmutzpartikeln ist eine derartige Oberflächenbeschichtung schnell abgetragen, so daß bei einem Lastkollektiv des Gelenks mit hohem Anteil mit starker Beugung eine Verbesserung nur für einen Teilbereich der Gesamtlebensdauer des Faltenbalgs sichergestellt werden kann.

Aus der US 4 830 767 ist ein Schmierfett für Antriebsgelenke, die mit einem Faltenbalg abgedeckt sind, bekannt. Dieses Fett soll dazu beitragen, das Elastomer dieser Faltenbälge vom Brechen und Sprödewerden während langen Winterbetriebes zu schützen. Weiterhin ist beschrieben, daß dieses Fett ein gutes Schmiermittel zwischen Metallteilen einerseits und elastomeren Kunststoffen andererseits ist. Als Basis für dieses Fett werden Poly-alpha-Olefine vorgeschlagen. Die Erzielung der angesprochenen Effekte verlangen jedoch eine Beimischung einer Kombination von Karbonat- und Phosphat-Additiven.

Aus der US 5 223 161 ist ein Fett für den gleichen Anwendungsfall bekannt, das Poly-alpha-Olefine als Basisöl hat, wobei ein Additivpaket aus Sulfat und einem aliphatischen Monocarboxylat besteht.

Aus der US 4 967 609 ist ein Faltenbalg aus Gummimaterial bekannt, der einen geschlossenen Überzug oder einzelne Ringelemente, die dauerhaft auf die Oberfläche der Falten aufgebracht sind, aufweist, wobei die Beschichtung oder die einzelnen Ringelemente aus einem Gummimaterial als Trägersubstanz und einem Anti-Degradations-Mittel besteht, die in die Oberfläche des Faltenbalges eindiffundieren sollen.

Aus der US 4 573 693 ist ein Faltenbalg zum Abdecken von Gleichlaufdrehgelenken bekannt, der eine Überzugsschicht aus Polyamidharz hat, die auf den Grundkörper mittels einer Primer-Schicht aufgeklebt ist. Die Aufgabe ist es, mittels eines auf den Grundkörper aufgeklebten Überzugs aus einem abweichenden Material Verschleiß zu reduzieren.

Aus der US 4 265 663 ist es bekannt, eine Wachsformulierung aus einem flüssigen Poly-alpha-Olefin und einem flüssigen Silikon auf Gummi- und Elastomer-Schläuche und Anschlüsse aufzubringen, um diese zu schützen und so haltbar zu machen. Das flüssige Silikon wird in Form einer wässrigen Emulsion verwendet.

Aus der unveröffentlichten DE 196 19 368.0 ist ein Faltenbalg mit einer Imprägnierung aus Kohlenwasserstoffen mit einem Molekulargewicht > 200 bekannt.

Der Erfindung liegt die Aufgabe zugrunde, ein Imprägniermittel für Faltenbälge und Faltenbälge mit Imprägnierung verbesserter Art bereitzustellen, mit denen der Verschleiß der sich gegenseitig berührenden Oberflächen bei Faltenbälgen dauerhaft herabgesetzt und das Squeakphänomen beseitigt werden kann.

Erfindungsgemäß wird die Aufgabe durch ein Imprägniermittel gelöst, das ein Trägerfluid, ein im Trägerfluid gelöstes Öl mit einem Molekulargewicht > 200 und ein öllösliches Benetzungsmittel, das die Oberflächenspannung des Öls herabsetzt, enthält bzw. durch einen Faltenbalg mit einer Imprägnierung und gegebenenfalls mit einer Filmbeschichtung bestehend aus einem Öl mit einem Molekulargewicht > 200 und einem im Öl gelösten Benetzungsmittel, das die Oberflächenspannung des Öls herabsetzt. Eine Imprägnierung eines Faltenbalgs mit dem erfindungsgemäßen Imprägniermittel liefert ein dauerhaftes Reservoir von Schmiermittel für die äußere Oberfläche über die ganze Lebensdauer des Faltenbalgs. Die Imprägnierung sorgt an der Oberfläche für gleichbleibend günstige Reibungsverhältnisse. Bei einem erfindungsgemäßen Faltenbalg mit Imprägnierung wird bei einer gegenseitigen Berührung der Falten bei starker Beugung der Verschleiß gering gehalten und die Squeakerscheinung unterdrückt. Das erfindungsgemäße Imprägniermittel ist sowohl bei Faltenbälgen aus thermoplastischem als auch aus elastomerem Material anwendbar.

Durch den Bestandteil von Benetzungsmittel im Imprägniermittel wird bei einem Imprägnieren unter gegebenen Randbedingungen eine deutlich höhere Ölaufnahme in der Faltenbalgwand erzielt. Weiterhin wird ein gleichmäßig verteilter nicht ins Material eindringender öliger Imprägniermittelfilm an der Oberfläche des Faltenbalges erzeugt, wobei die in der Faltenbalgwand befindliche Imprägniermittelmenge stützend auf diesen Imprägniermittelfilm wirkt.

Bevorzugte Beispiele für Benetzungsmittel sind Fettsäurederivate, Sulfonate, Amidwachse, Oxidwachse (Handelsnamen Alox, Locksol) und stickstoffhaltige heterozyklische Verbindungen wie z.B. Imidazoline.

Geeignete Öle sind Kohlenwasserstofföle, sowohl aus natürlichen wie aus synthetischen Kohlenwasserstoffen und Esteröle. Letztere können bereits als Zusatz einen Weichmacherentzug aus der Faltenbalgwand infolge des Impägnierens vermeiden.

Als Kohlenwasserstofföle können Poly-alpha-Olefin-Öle oder paraffinische Mineralöle einzeln oder in Kombination verwendet werden.

Als Trägerfluid kommen bevorzugt Paraffine und Isoparaffine in Betracht. Das Trägerfluid soll bei Verarbeitungstemperatur flüchtig sein und keinen Bestandteil der bleibenden Imprägnierung des Faltenbalgs bilden.

Eine geeignete Viskosität des Imprägniermittels zum Herstellen der Imprägnierung liegt in der Größenordnung zwischen 1,5 und 20 mm²/sec bei Verarbeitungstemperatur. Diese Viskosität erlaubt es, die Imprägnierung in einen äußeren Oberflächenbereich eindringen zu lassen, wobei das Trägerfluid anschließend weitestgehend verdampft, wonach das Öl und das darin gelöste Benetzungsmittel im Material der Faltenbalgwand verbleiben, um das genannte Schmiermittelreservoir zu bilden. Die Dicke des mit einer Imprägnierung versehenen Wandbereiches soll von der Oberfläche ausgehend nicht weniger als 0,2 mm betragen. In der Regel wird jedoch die Faltenbalgwand in gesamter Dicke mit der Imprägnierung versehen, da das erfindungsgemäße Imprägniermittel schnell und tief bis zur Sättigung eindringt.

In bevorzugter Weise werden die Bunde des Faltenbalgs von einer Imprägnierung freigehalten, da ein Schmiereffekt für die darauf liegenden Spannbänder ungeeignet wäre.

An mit dem erfindungsgemäßen Imprägniermittel behandelten mit einer Imprägnierung versehenen Faltenbälgen treten weder Abrieb auf, die durch daraus folgende Undichtigkeiten die Funktion des Gelenks beeinträchtigen könnten, noch sind an ihnen Squeakerscheinungen im Einsatz festzustellen.

Besonders vorteilhaft ist es, wenn das genannte Benetzungsmittel Korrosionsschutzwirkung für Metalle hat. Wenn nach einem erfindungsgemäßen Verfahren das Imprägniermittel auf Faltenbälge aufgebracht wird, die an fertig montierten Gelenkenwellen verbaut sind, so kann das Aufbringen des Imprägniermittels auf die metallischen Teile der Gelenkwellen erstreckt werden. Diese erhalten dann zugleich einen wirksamen bleibenden Korrosionsschutz, der aus einer Beschichtung bzw. aus einem Film des im Öl gelösten als Korrosionsschutzmittel wirkenden Benetzungsmittel besteht.

Vorteilhaft ist es, daß bei einem Aufbringen des Imprägniermittels an der fertig montierten Gelenkwelle die Bundbereiche der Faltenbälge, auf denen die Spannbänder aufsitzen, von diesen bereits abgedeckt sind, so daß die Bundbereiche nicht imprägniert werden. Dementsprechend findet hier auch kein Öleintrag statt, der den festen Sitz der Spannbänder behindern könnte.

## Patentansprüche

1. Imprägniermittel für Faltenbälge aus thermoplastischem oder elastomerem Material, enthaltend ein Öl mit einem Molekulargewicht > 200,
**gekennzeichnet durch**
ein Trägerfluid, in dem das Öl gelöst ist, und ein öllösliches Benetzungsmittel, das die Oberflächenspannung des Öls herabsetzt.

2. Imprägniermittel nach Anspruch 1,
**dadurch gekennzeichnet,**
**daß** das Benetzungsmittel ausgewählt ist aus
- Fettsäurederivaten,
- Sulfonaten,
- Oxidwachsen und
- stickstoffhaltigen heterozyklischen Verbindungen, wie z.B. Imidazolinen.

3. Imprägniermittel nach einem der Ansprüche 1 oder 2,
**dadurch gekennzeichnet,**
**daß** das Öl ausgewählt ist aus
- Kohlenwasserstoffölen und
- Esterölen,
einzeln oder in Kombination miteinander.

4. Imprägniermittel nach Anspruch 3,
**dadurch gekennzeichnet,**
**daß** das Kohlenwasserstofföl ausgewählt ist aus
- Poly-alpha-Olefin-Ölen und
- paraffinischen Mineralölen,
einzeln oder in Kombination miteinander.

5. Imprägniermittel nach einem der Ansprüche 1 bis 4,
**dadurch gekennzeichnet,**
**daß** das Trägerfluid ausgewählt ist aus
- Paraffinen und
- Isoparaffinen.

6. Imprägniermittel nach einem der Ansprüche 1 bis 5,
**dadurch gekennzeichnet,**
**daß** es bei Verarbeitungstemperatur eine Viskosität im Bereich von 1,5 - 20 mm²/s hat.

7. Imprägniermittel nach einem der Ansprüche 1 bis 6,
**dadurch gekennzeichnet,**
**daß** das Trägerfluid bei Verarbeitungstemperatur flüchtig ist.

8. Imprägniermittel nach einem der Ansprüche 1 bis 7,
**dadurch gekennzeichnet,**
**daß** als Benetzungsmittel ein Korrosionsschutzmittel für Metalle gewählt wird.

9. Imprägniermittel nach einem der Ansprüche 1 bis 8,
**dadurch gekennzeichnet,**
**daß** das Benetzungsmittel im Verhältnis zum Öl zumindest einen Anteil von 0,1 Gewichtsprozenten hat.

10. Imprägniermittel nach einem der Ansprüche 1 bis 9,
**dadurch gekennzeichnet,**
**daß** das Öl bezogen auf das Trägerfluid einen Anteil von 20 - 50 Gewichtsprozenten hat.

11. Faltenbalg mit einer Imprägnierung, die aus einem Öl mit einem Molekulargewicht > 200 besteht,
**dadurch gekennzeichnet, daß** die Imprägnierung
ein im Öl gelöstes Benetzungsmittel aufweist, das die Oberflächenspannung des Öls herabsetzt.

12. Faltenbalg nach Anspruch 11,
**gekennzeichnet durch**
eine Filmbeschichtung, die aus einem Öl mit einem Molekulargewicht > 200 und einem im Öl gelösten Benetzungsmittel, das die Oberflächenspannung des Öls herabsetzt, besteht.

13. Faltenbalg nach Anspruch 11 oder 12,
**dadurch gekennzeichnet,**
**daß** das Benetzungsmittel ausgewählt ist aus
- Fettsäurederivaten,
- Sulfonaten,
- Amidwachsen,
- Oxidwachsen und
- stickstoffhaltigen heterozyklischen Verbindungen, wie z.B. Imidazolinen.

14. Faltenbalg nach einem der Ansprüche 11 bis 13,
**dadurch gekennzeichnet,**
**daß** das Öl ausgewählt ist aus
- Kohlenwasserstoffölen und
- Esterölen, einzeln oder in Kombination miteinander.

15. Faltenbalg nach Anspruche 14,
**dadurch gekennzeichnet,**
**daß** das Kohlenwasserstofföl ausgewählt ist aus
- Poly-alpha-Olefin-Ölen und
- paraffinischen Mineralölen,
einzeln oder in Kombination miteinander.

16. Verfahren zum Imprägnieren von Faltenbälgen mit einem Imprägniermittel nach einem der Ansprüche 1 bis 10,
**dadurch gekennzeichnet,**
**daß** ein Auftragen und Einwirkenlassen von Imprägniermittel auf die Faltenbälge an fertig montierten Gelenkwellen erfolgt und daß das Auftragen des Imprägniermittels auf die metallischen Teile der Gelenkwellen erstreckt wird, wobei das Imprägniermittel für die metallischen Teile einen bleibenden Korrosionsschutz bildet.

## Claims

1. An impregnating agent for convoluted boots made of a thermoplastic or elastomer material, containing an oil with a molecular weight > 200,
**characterised by**
a carrier fluid in which the oil is dissolved and an oil-soluble wetting agent which reduces the surface tension of the oil.

2. An impregnating agent according to claim 1,
**characterised in**
**that** the wetting agent is selected from
- fatty acid derivatives
- sulphonates
- oxide waxes and
- nitrogen-containing heterocyclic compounds such as imidazolenes.

3. An impregnating agent according to any one of claims 1 or 2,
**characterised in**
**that** the oil is selected from
- hydrocarbon oils and
- ester oils,
individually or in combination with one another.

4. An impregnating agent according to claim 3,
**characterised in**
**that** the hydrocarbon oil is selected from
- poly-alpha-olefin oils and
- paraffinic mineral oils,
individually or in combination with one another.

5. An impregnating agent according to any one of claims 1 to 4,
**characterised in**
**that** the carrier fluid is selected from
- paraffins and
- isoparaffins.

6. An impregnating agent according to any one of claims 1 to 5,
**characterised in**
**that**, at its processing temperature, it has a viscosity ranging from 1.5 to 20 mm²/s.

7. An impregnating agent according to any one of claims 1 to 6,
**characterised in**
**that**, at its processing temperature, the carrier fluid is volatile.

8. An impregnating agent according to any one of claims 1 to 7,
**characterised in**
**that** the wetting agent is selected in the form of a corrosion protection agent for metals.

9. An impregnating agent according to any one of claims 1 to 8,
**characterised in**
**that** the wetting agent, relative to the oil, comprises at least a share of 0.1 percent by weight.

10. An impregnating agent according to any one of claims 1 to 9,
**characterised in**
**that** the oil, relative to the carrier fluid, comprises a share of 20 to 50 percent by weight.

11. A convoluted boot having an impregnating agent which consists of an oil with a molecular weight > 200,
**characterised in**
**that** the impregnating agent comprises a wetting agent which is dissolved in the oil and which reduces the surface tension of the oil.

12. A convoluted boot according to claim 11,
**characterised by**
a film coating which consists of an oil with a molecular weight > 200 and of a wetting agent dissolved in the oil and reducing the surface tension of the oil.

13. A convoluted boot according to claim 11 or 12,
**characterised in**
**that** the wetting agent is selected from
- fatty acid derivatives,
- sulphonates,
- amide waxes and
- nitrogen-containing heterocyclic compounds such as imidazolenes.

14. A convoluted boot according to any one of claims 11 to 13,
**characterised in**
**that** the oil is selected from
- hydrocarbon oils and
- ester oils,
individually or in combination with one another.

15. A convoluted boot according to claim 14,
**characterised in**
**that** the hydrocarbon oil is selected from
- poly-alpha-olefin oils and
- paraffinic mineral oils,
individually or in combination with one another.

16. A process of impregnating convoluted boots with an impregnating agent according to any one of claims 1 to 10,
**characterised in**
**that** the impregnating agent is applied to, and acts on, the convoluted boots mounted on finish-assembled driveshafts and that the impregnating agent is also applied to the metallic parts of the driveshafts, wherein the impregnating agent for the metallic parts forms a permanent corrosion protection.

## Revendications

1. Agent d'imprégnation pour soufflets en matériau thermoplastique ou élastomère, contenant une huile de poids moléculaire > 200,
**caractérisé par**
un fluide porteur dans lequel l'huile est dissoute et un agent tensioactif soluble dans l'huile qui abaisse la tension superficielle de l'huile.

2. Agent d'imprégnation selon la revendication 1,
**caractérisé en ce que**
l'agent tensioactif est choisi parmi
- des dérivés d'acides gras,
- des sulfonates,
- des cires à oxydes
- des composés hétérocycliques azotés, comme par exemple des imidazolines.

3. Agent d'imprégnation selon l'une des revendications 1 ou 2,
**caractérisé en ce que**
l'huile est choisie parmi
- des huiles à base d'hydrocarbures et
- des huiles à base d'esters,
seules ou en combinaison les unes avec les autres.

4. Agent d'imprégnation selon la revendication 3,
**caractérisé en ce que**
l'huile à base d'hydrocarbures est choisie parmi
- des huiles de poly-alpha-oléfines et
- des huiles minérales paraffiniques
seules ou en combinaison les unes avec les autres.

5. Agent d'imprégnation selon l'une quelconque des revendications 1 à 4,
**caractérisé en ce que**
le fluide porteur est choisi parmi
- des paraffines et
- des isoparaffines.

6. Agent d'imprégnation selon l'une quelconque des revendications 1 à 5,
**caractérisé en ce**
**qu'**à la température de mise en oeuvre, il a une viscosité dans l'intervalle de 1,5 à 20 mm²/s.

7. Agent d'imprégnation selon l'une quelconque des revendications 1 à 6,
**caractérisé en ce que**
le fluide porteur est volatile à la température de mise en oeuvre.

8. Agent d'imprégnation selon l'une quelconque des revendications 1 à 7,
**caractérisé en ce que**,
comme agent tensioactif est choisi un agent anticorrosion pour des métaux.

9. Agent d'imprégnation selon l'une quelconque des revendications 1 à 8,
**caractérisé en ce que**
l'agent tensioactif a une proportion d'au moins 0,1 pour-cent en poids par rapport à l'huile.

10. Agent d'imprégnation selon l'une quelconque des revendications 1 à 9,
**caractérisé en ce que**
l'huile a une proportion de 20 à 50 pour-cent en poids par rapport au fluide porteur.

11. Soufflet avec une imprégnation qui consiste en une huile d'un poids moléculaire > 200
**caractérisé en ce que**
l'imprégnation comprend un agent tensioactif soluble dans l'huile, qui diminue la tension superficielle de l'huile.

12. Soufflet selon la revendication 11,
**caractérisé par**
une enduction par un film qui consiste en une huile d'un poids moléculaire > 200 et un agent tensioactif dissout dans l'huile qui diminue la tension superficielle de l'huile.

13. Soufflet selon la revendication 11 ou 12,
**caractérisé en ce que**
l'agent tensioactif est choisi parmi
- des dérivés d'acides gras,
- des sulfonates,
- des cires d'amide,
- des cires à oxydes et
- des composés hétérocycliques azotés tels par exemple des imidazolines.

14. Soufflet selon l'une quelconque des revendications 11 à 13,
**caractérisé en ce que**
l'huile est choisie parmi
- des huiles à base d'hydrocarbures et
- des huiles à base d'esters,
seules ou en combinaison les unes avec les autres.

15. Soufflet selon la revendication 14,
**caractérisé en ce que**
l'huile à base d'hydrocarbures est choisie parmi
- des huiles de poly-alpha-oléfines et
- des huiles minérales paraffiniques seules ou en combinaison les unes avec les autres.

16. Procédé d'imprégnation de soufflets avec un agent d'imprégnation selon l'une quelconque des revendications 1 à 10,
**caractérisé en ce**
**qu'**on applique l'agent d'imprégnation et qu'on le laisse agir sur les soufflets sur des arbres à cardan tout assemblés, et que l'application de l'agent d'imprégnation s'étend sur les parties métalliques des arbres à cardans, moyennant quoi l'agent d'imprégnation forme pour les parties métalliques une protection anticorrosion permanente.
